# EUROPÄISCHE PATENTSCHRIFT

(11) **EP 2 778 560 B1**
(45) Veröffentlichungstag und Bekanntmachung des Hinweises auf die Patenterteilung: **14.10.2015**
(21) Anmeldenummer: 13199651.4
(22) Anmeldetag: 27.12.2013
(51) Int. Cl.: F24H 9/12, C02F 1/42, E03B 7/07, E03C 1/10, F16K 37/00, F16K 5/06, F24D 3/10, F16K 31/04

(54) **Heizungsarmatur**
Heating fitting
Robinetterie de chauffage

(30) Priorität: 12.03.2013 DE 102013102460
(43) Veröffentlichungstag der Anmeldung: 17.09.2014
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A2- 1 452 652
- EP-A2- 1 681 520
- DE-U1-202010 008 759

## Beschreibung

### Technisches Gebiet

Die Erfindung betrifft eine Armaturenanordnung zum Füllen und Nachfüllen von Heizkreisläufen mit Wasser, enthaltend
(a) ein in eine zu dem Heizkreislauf führende Rohrleitung einbaubares, strömungsführendes Armaturengehäuse mit einem Einlass und einem Auslass;
(b) einen von einem Motor angetriebenen Absperrhahn;
(d) einen Filter;
(c) eine Sytemtrenneranordnung mit einem stromaufwärtigen und einem stromabwärtigen Rückflussverhinderer und einem Ablauf;
(e) einen Druckminderer; und
(f) einen Drucksensor.

Derartige Armaturenanordnungen sind bekannt. Mit dem motorbetriebenen Absperrhahn, kann ein Heizkreislauf automatisch befüllt werden. Wenn der Druck im Heizkreislauf absinkt, öffnet der Absperrhahn eine Verbindung zur Wasserversorgung und Wasser fließt in den Heizkreislauf.

Ein Filter filtert Partikel aus dem Wasser. Eine Systemtrenneranordnung stellt sicher, dass kein Wasser aus dem Heizkreislauf zurück in die Wasserversorgung fließen kann. Bei einem defekten Rückflussverhinderer und einem Abfall des Eingangsdrucks öffnet ein Ablaufventil und Wasser fließt nach außen ab. Mit einem Druckminderer wird der Fülldruck geregelt. Die Heizungsarmaturen werden gewöhnlich einzeln in der Rohrleitung installiert.

### Stand der Technik

Unter der Bezeichnung "Füllkombi" vertreibt die Anmelderin Heizungsarmaturen zum Füllen von Heizkreisläufen. Unter der Bezeichnung "Heizungscenter" vertreibt die Anmelderin Kombinationsarmaturen, bei denen ein Systemtrenner und ein Filter in separaten Gehäusen hintereinander angeordnet sind.

DE 20 2009 000 084 U1 offenbart einen rückspülbaren Filter. Das Filtermaterial sitzt in einer Filtertasse. Das Heizungswasser fließt kontinuierlich durch den Filter. Dadurch bleiben Partikel im Filtermaterial hängen. Wenn ein Kugelhahn am Ablauf geöffnet wird, dreht sich die Strömungsrichtung im Filter um und Wasser fließt in umgekehrter Richtung durch das Filtermaterial nach außen ab. Dabei werden Schmutzpartikel mitgenommen.

EP 1 431 466 A2 offenbart eine als Ganzes montierbare Baugruppe aus Armaturen und Geräten zur Wasserversorgung. Die einzelnen Armaturen sind in eigenen Gehäuseteilen untergebracht.

DE 20 2009 001 957 U1 offenbart eine modulare Anordnung, bei welcher Rohrtrenner, Wasserenthärtungsanordnungen, Filter und Druckminderer als Module hintereinander mit Flanschverbindungen zu einer Armaturenanordnung zusammengesetzt werden können. Jedes Modul umfasst ein eigenes Gehäuse. Der Montageaufwand ist vergleichsweise hoch.

DE 20 2010 008 759 U1 offenbart eine Ionentauscheranordnung, die sandwichartig zwischen einem Armaturenteil mit einem Rohrtrenner und einer Anschlussarmatur montiert werden kann. Ein motorbetriebenes Absperrventil ist auf der Auslassseite vorgesehen. Die Motorsteuerung erhält Signale eines Leitfähigkeitssensors.

### Offenbarung der Erfindung

Es ist Aufgabe der Erfindung, eine Armaturenanordnung zum Füllen und Nachfüllen von Heizkreisläufen mit Wasser der eingangs genannten Art zu schaffen, die besonders einfach zu montieren ist, wenig Material und Platz verbraucht und leicht zu steuern ist.

Erfindungsgemäß wird die Aufgabe dadurch gelöst, dass
(f) der Absperrhahn im Bereich eines für den Absperrhahn und die Systemtrenneranordnung gemeinsamen Gehäuses hydraulisch vor der Systemtrenneranordnung angeordnet ist,
(g) das Gehäuse einen hydraulisch hinter dem Absperrhahn angeordneten, ersten Gehäusestutzen aufweist, in dem der Filter einsetzbar ist;
(h) das Gehäuse einen hydraulisch hinter der Systemtrenneranordnung angeordneten, zweiten Gehäusestutzen aufweist, in dem der Druckminderer einsetzbar ist; und
(i) ein Steuergerät vorgesehen ist, welches mit den Signalen des Drucksensors beaufschlagt ist und den Absperrhahn bei einem Druckabfall öffnet.

Anders als bei bekannten Heizungsarmaturen sitzen alle Komponenten in einem gemeinsamen Gehäuse. Die Strömungsführung durch Öffnungen, Stutzen und Kanäle ist derart gestaltet, dass die Komponenten hydraulisch hintereinander angeordnet sind. Der Vorteil des gemeinsamen Gehäuses ist es, dass der Montageaufwand verringert wird und weniger Material und Platz benötigt wird.

In einer vorteilhaften Ausgestaltung der Erfindung ist ein ein Ionentauscher oder andere Einrichtung zur Wasserbehandlung mit Anschlüssen an das gemeinsame Gehäuse vorgesehen. Eine Wasserbehandlung kann jede Art von chemischer oder physikalischer Wasserenthärtung umfassen. Es kann aber auch eine Wasserbehandlung durch Bestrahlung mit Licht, z.B. UV-Licht, Zusatz von Chemikalien oder dergleichen vorgesehen sein. Es versteht sich, dass die Chemikalien oder das Ionentauschermaterial in einem gesonderten Gehäuse untergebracht sein können und das gemeinsame Gehäuse lediglich geeignete Anschlüsse aufweist.

Vorteilhafterweise wird zusätzlich zu der Einrichtung zur Wasserbehandlung ein Leitfähigkeitssensor in der Strömung stromabwärts zum Gerät für die Wasserbehandlung vorgesehen, dessen Signale an das Steuergerät übertragen werden. Mit dem Leitfähigkeitssensor wird die Leitfähigkeit überwacht. Diese ist ein gutes Maß für den Kalkgehalt im Wasser. Wenn die Leitfähigkeit steigt, ist dies ein Indiz dafür, dass der Ionentauscher gewartet werden muss. Das Steuergerät kann dann eine Nachricht erzeugen, die an die für die Wartung zuständige Person übermittelt wird.
Es ist weiterhin vorteilhaft, wenn eine Verschneideeinrichtung vorgesehen ist, mit welcher dem durch das Gerät für die Wasserbehandlung geleiteten Wasser unbehandeltes Wasser beigemischt wird. Die Verschneideeinrichtung kann insbesondere in das gemeinsame Gehäuse integriert sein. Die Verschneidung kann durch einen Bypass mit einstellbarem Querschnitt erfolgen. Der Bypass verbindet einen Strömungsabschnitt für unbehandeltes Rohwasser mit dem Bereich hinter dem Gerät für die Wasserbehandlung. Je nach Querschnitt fließt dann dem behandelten Wasser mehr oder weniger Rohwasser beigemischt.

In einer weiteren Ausgestaltung der Erfindung sind eine Turbine oder andere strömungsmessende Mittel vorgesehen, deren Signale an das Steuergerät übertragen werden. Mit der Turbine kann ermittelt werden, ob im Bereich vor dem Heizkreislauf oder in der Armatur Leckage vorliegt. Fließt Wasser durch die Turbine, auch wenn der Absperrhahn geschlossen ist, dann ist von einer Leckage auszugehen. Das ist insbesondere dann der Fall, wenn z.B. der Systemtrenner defekt ist.

Vorteilhafterweise weist das Steuergerät eine Kommunikationseinrichtung zur Kommunikation mit einem geeigneten Empfangsgerät über das Internet, Mobilfunknetz, anderes geeignetes Netzwerk oder drahtlosen Übertragungsweg auf. Dann kann das Steuergerät Meldungen über Leckage, erforderliche Wartungsarbeiten am Ionentauscher oder dergleichen an den zuständigen Installateur, Verwalter oder Wohnungsinhaber übermitteln. Die Kommunikation kann direkt oder über einen zentralen Server erfolgen.

In einer weiteren Ausgestaltung der Erfindung besteht das gemeinsame Gehäuse aus einem ersten Gehäuseteil zum Anschließen an eine Rohrleitung und einem mit dem ersten Gehäuseteil verbindbaren zweiten Gehäuseteil, wobei der Absperrhahn, der Filter, die Sytemtrenneranordnung, der Druckminderer und der Drucksensor in dem zweiten Gehäuseteil angeordnet sind. Das erste Gehäuseteil fungiert damit ausschließlich als Rohranschlussteil und hat keine sonstigen Funktionen. Alle Funktionalitäten bis auf ggf. eine Absperrung, erfolgen im zweiten Gehäuseteil.

Vorzugsweise ist der Filter als Rückspülfilter mit einem absperrbaren Auslass für das Spülwasser ausgebildet. Die Rückspülung kann von Hand ausgelöst werden. Es ist aber auch möglich, die Absperrung mit dem Steuergerät zu betätigen.

Bei einer weiteren Ausgestaltung der Erfindung ist ein Kugelhahn oder eine andere Absperrung im Auslass vorgesehen. Mit dem Kugelhahn kann die Zufuhr zum Heizkreislauf unterbrochen werden. Wenn auch der motor-betätigte Kugelhahn geschlossen ist, können die einzelnen Komponenten ausgetauscht oder gewartet werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung eines Heizungsvollautomat mit Steuergerät und Kommunikationseinrichtung.

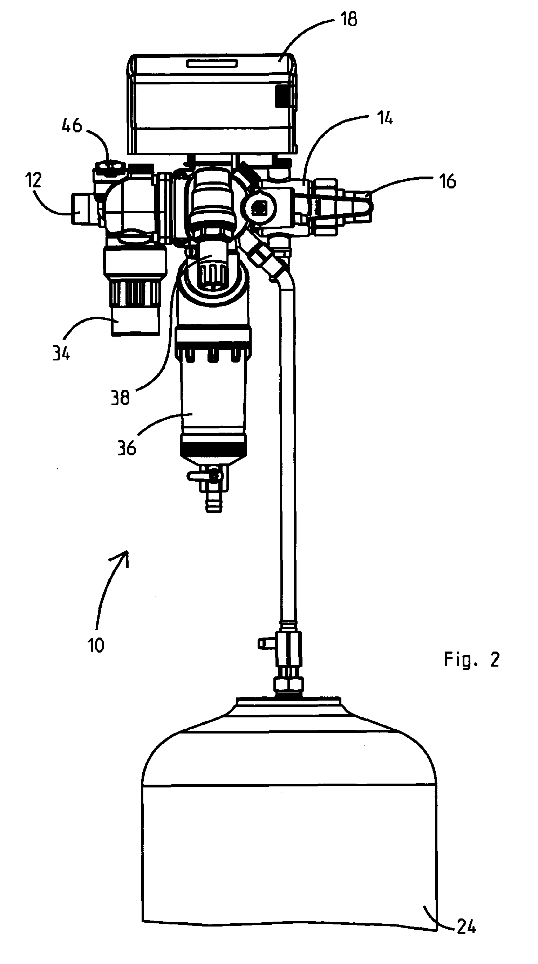

- Fig.2: ist eine Vorderansicht des oberen Bereichs des Heizungsvollautomaten aus Figur 1.

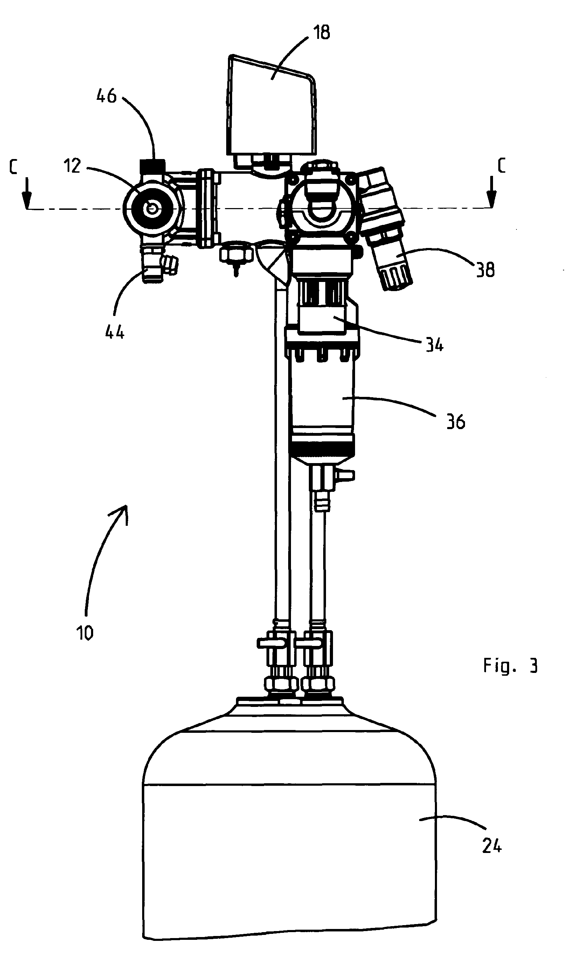

- Fig.3: ist eine Seitenansicht des oberen Bereichs des Heizungsvollautomaten aus Figur 1.

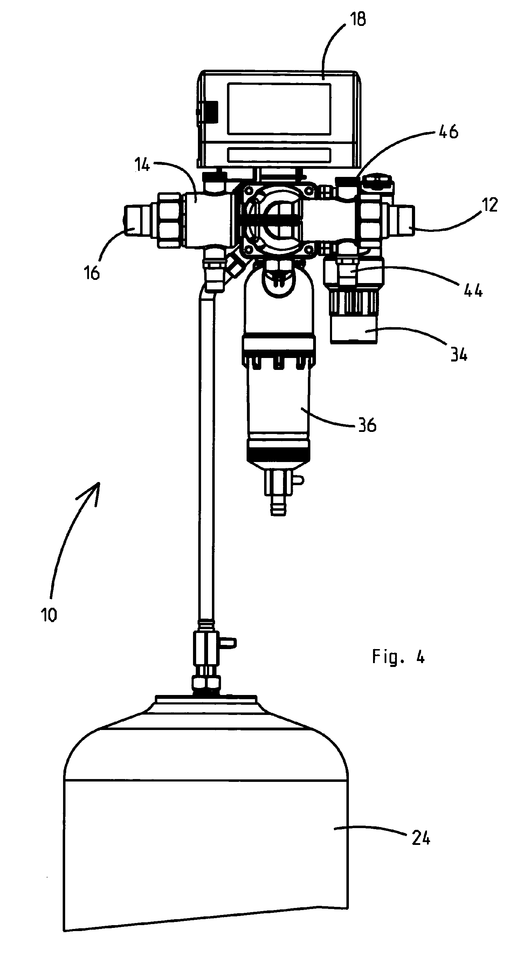

- Fig.4: ist eine Rückansicht des oberen Bereichs des Heizungsvollautomaten aus Figur 1.
- Fig.5: ist eine Draufsicht auf den Heizungsvollautomaten aus Figur 1.
- Fig.6: ist ein Querschnitt entlang der vertikalen Schnittebene A-A in Figur 5.
- Fig.7: ist ein Querschnitt entlang der vertikalen Schnittebene B-B in Figur 5.
- Fig.8: ist ein Querschnitt entlang der horizontalen Schnittebene C-C in Figur 3.

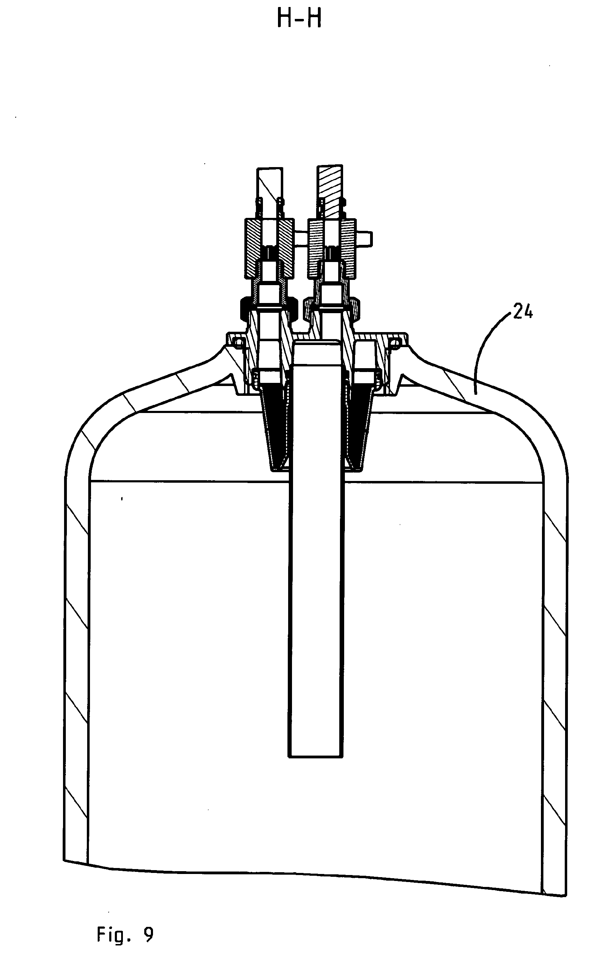

- Fig.9: ist ein Querschnitt durch den oberen Bereich des Ionentauschers entlang einer vertikalen Schnittebene.

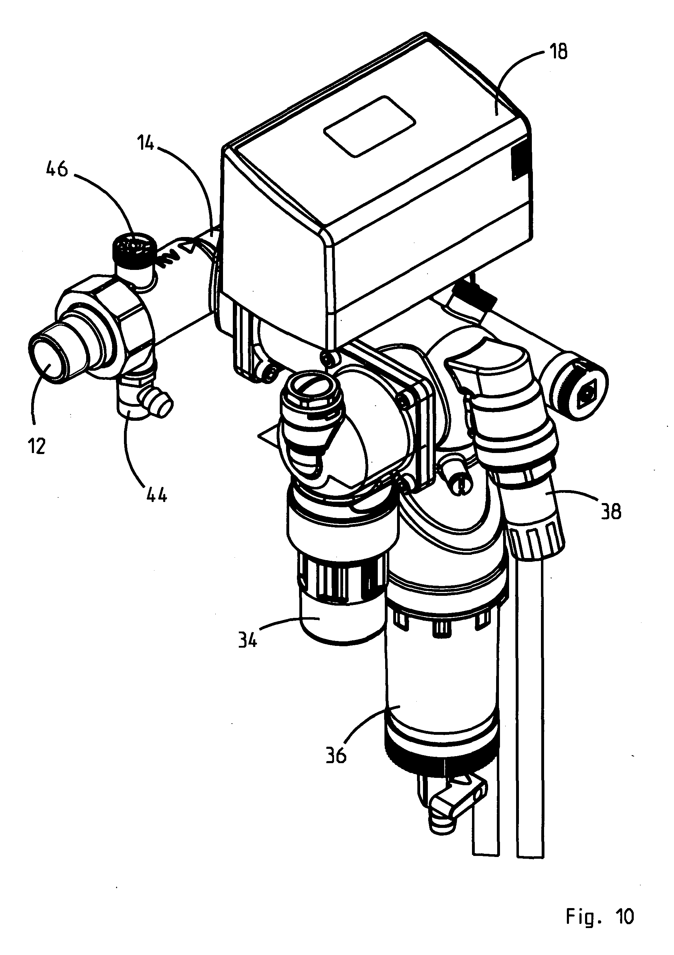

- Fig.10: ist eine perspektivische Ansicht des oberen Bereichs des Heizungsvollautomats aus Figur 1 ohne Abdeckung.

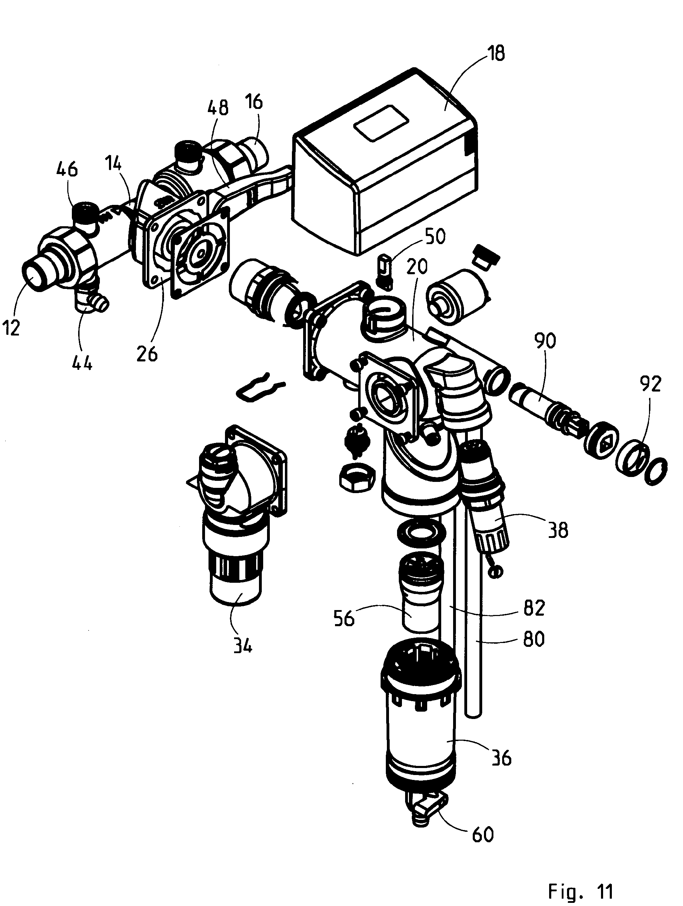

- Fig.11: zeigt die in Figur 10 gezeigten Komponenten in Explosionsdarstellung.

### Beschreibung des Ausführungsbeispiels

Die Figuren zeigen einen Heizungsvollautomat, der allgemein mit 10 bezeichnet ist. Der Heizungsvollautomat 10 weist eine Anschlussarmatur 14 mit einem Einlass 12 und einem koaxialen Auslass 16 auf. Der Heizungsvollautomat 10 wird mit dem Einlass 12 und dem Auslass 16 in einer Rohrleitung (nicht dargestellt) installiert, mit der aus Wasser aus einer Wasserversorgung zum Befüllen eines Heizkreislaufs bereitgestellt wird.

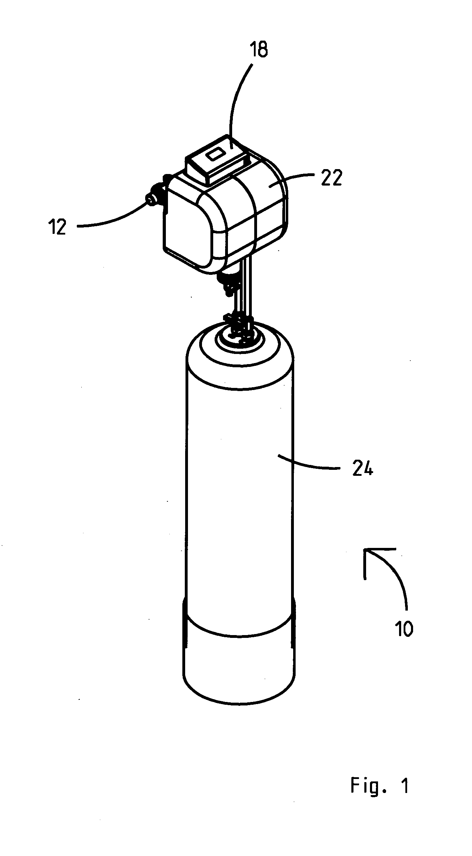

Der Heizungsvollautomat weist ein Steuergerät 18 mit einer Kommunikationseinheit auf. Das Steuergerät 18 ist auf einem noch zu beschreibenden Armaturenteil 20 angeordnet, das in Figur 1 mit einer Abdeckung 22 dargestellt ist. Die Abdeckung wurde der Übersichtlichkeit halber in den übrigen Zeichnungen weggelassen.

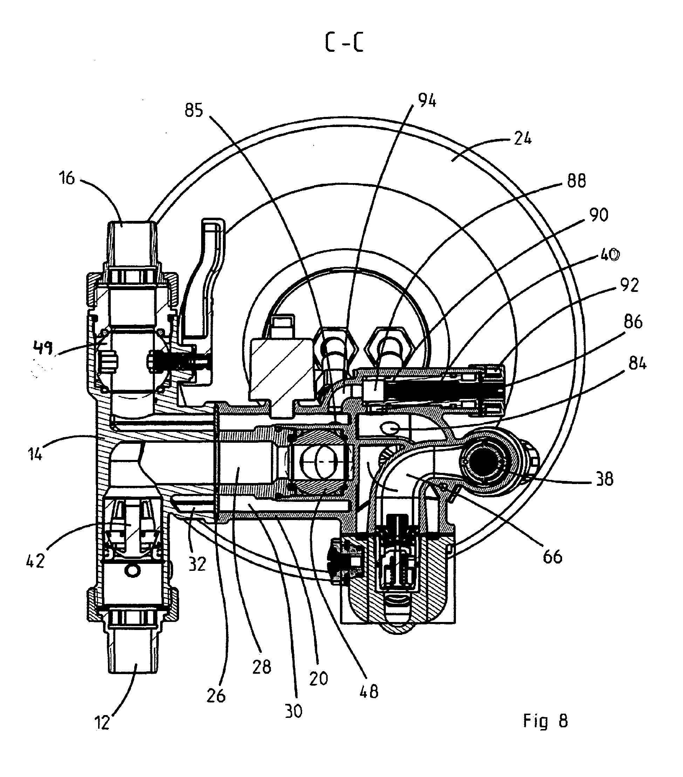

Das Armaturenteil 20 ist mit einer Flanschverbindung 26 (Fig.8) an die Anschlussarmatur 14 angeflanscht. Derartige Flanschverbindungen 26 sind im Armaturenbereich bekannt. Das Wasser fließt vom Einlass 12 durch einen zentralen Kanal 28 in das Armaturenteil 20 hinein. Um den zentralen Kanal 28 ist ein Ringkanal 30 angeordnet, der mit einem Ringkanal 32 in der Anschlussarmatur 14 verbunden ist. Der Ringkanal 32 mündet im Auslass 16. Von dort fließt das Wasser in den Heizkreislauf. Derartige Flanschverbindungen sind beim Einbau sehr praktisch. Es versteht sich aber, dass auch andere bekannte Arten der Verbindung verwendet werden können. So kann beispielsweise auch eine einteilige Armatur direkt in die Rohrleitung eingebaut werden, ohne dass die Funktionsweise beeinträchtigt würde.

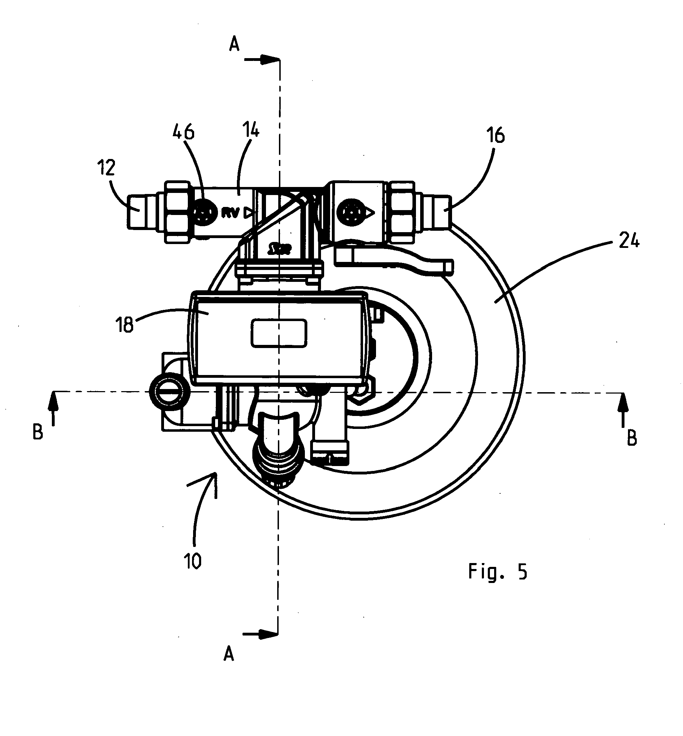

Der Heizungsvollautomat 10 weist einen Systemtrenner mit Ablauftrichter 34, einen rückspülbaren Filter 36, einen Druckminderer 38 und einen Ionentauscher 24 mit Verschneideeinrichtung 40 auf. Zusätzlich ist ein Rückflussverhinderer 42 im Bereich des Einlasses 12 angeordnet, der in Figur 8 erkennbar ist. Dort ist auch ein absperrbarer Auslass 44 und ein Manometeranschluss 46 zur Druckbestimmung vorgesehen. Sowohl am Auslass 44, als auch am Manometeranschluss 46 können Proben genommen werden, mit denen die Wasserqualität bestimmt werden kann. Der Auslass 16 ist mit einem handbetätigten Kugelhahn 49 verschließbar. Dieser ist in Figur 5 und 8 gut zu erkennen.

Der mit dem Einlass 12 verbundene Zentralkanal 28 mündet in einem Kugelventil 48. Das Kugelventil 48 ist über einen Zapfen 50 mit der Motorsteuerung des Steuergeräts 18 verbunden. Auf diese Weise kann die Absperrung der Wasserversorgung vom Steuergerät 18 gesteuert werden.

Die Kugel des Kugelventils 48 ist nach unten offen und verbindet den Zentralkanal 28 mit einem Verbindungskanal 52 zu der Filtertasse 54 des Filters 36. Der Filter 36 ist ein bekannter, rückspülbarer Filter. Wasser fließt außerhalb einer Hülse 56 in der Filtertasse 54 nach unten. Von unten fließt das Wasser durch das Filtermaterial 58' im Innern der Hülse 56 nach oben. Zum Rückspülen des Filters 36 ist ein Ablauf 58 vorgesehen, der mit einem Kugelhahn 60 verschlossen ist. Wenn der Kugelhahn 60 geöffnet wird, fließt Wasser in umgekehrter Richtung durch das Filtermaterial und nimmt Schmutzpartikel mit nach außen.

Oberhalb des Filtermaterials ist ein Rückflussverhinderer 62 und eine Turbine 64 angeordnet. Die Turbine 64 ist mit einem Magneten versehen. Ein Reedkontakt erfasst die Turbinenbewegung und misst so die durch die Turbine 64 fließende Strömung. Die Turbine 64 hat einen Anlaufwiderstand. Geringe Strömungen werden daher über einen Bypass am Rückflussverhinderer vorbei zur Turbine 64 geleitet und strömen dort von der Seite auf die Turbinenschaufel. Auf diese Weise werden auch kleinste Strömungen erfasst. Die genaue Funktionsweise des Filters und des Strömungsmessers ist in der DE 20 2008 003 055 U1 beschrieben und braucht daher hier nicht näher erläutert werden.

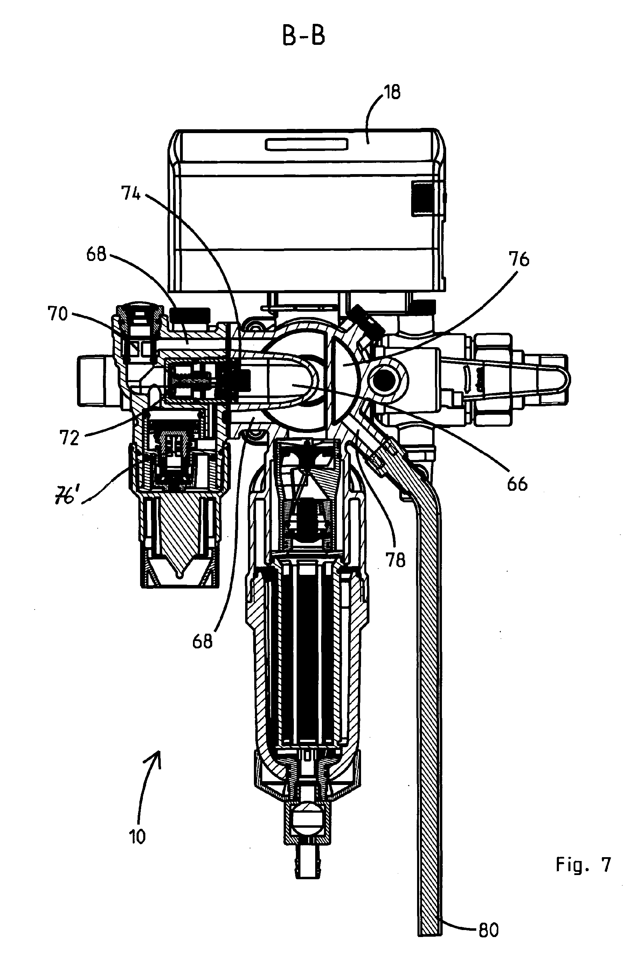

Das gefilterte Wasser fließt in einen Ringkanal 68, der in der horizontalen Schnittdarstellung in Figur 7 gut zu erkennen ist. Im Ende des Ringkanals 68 ist ein Sieb 70 vorgesehen. Hinter dem Sieb fließt das Wasser durch einen Systemtrenner mit einem stromaufwärtigen Rückflussverhinderer 72 und einem stromabwärtigen Rückflussverhinderer 74. Der Mitteldruckraum zwischen den Rückflussverhinderern 72 und 74 ist mit einem Ablauf mit Ablauftrichter 34 verbunden. Dieser wird von einem Kolben 76' kontrolliert. Die Funktionsweise eines Systemtrenners mit einem solchen Kolben 76' ist in der DE 10 2012 102 701 ausführlich beschrieben und die Anmelderin vertreibt derartige Systemtrenner u.a. auf der Webseite www.syr.de.

Beim Befüllen oder Nachfüllen des Heizkreislaufs, öffnen die Rückflussverhinderer 72 und 74. Das Wasser fließt in einen gekrümmten Kanal 66. Dieser Kanal 66 ist in Figur 8 gut zu erkennen. Der Kanal 66 führt zu dem Druckminderer 38. Druckminderer sind allgemein bekannt und brauchen daher hier nicht weiter beschrieben werden. Mit dem Druckminderer 38 wird der Druck beim Befüllen des Heizkreislaufs auf einen konstanten Wert geregelt.

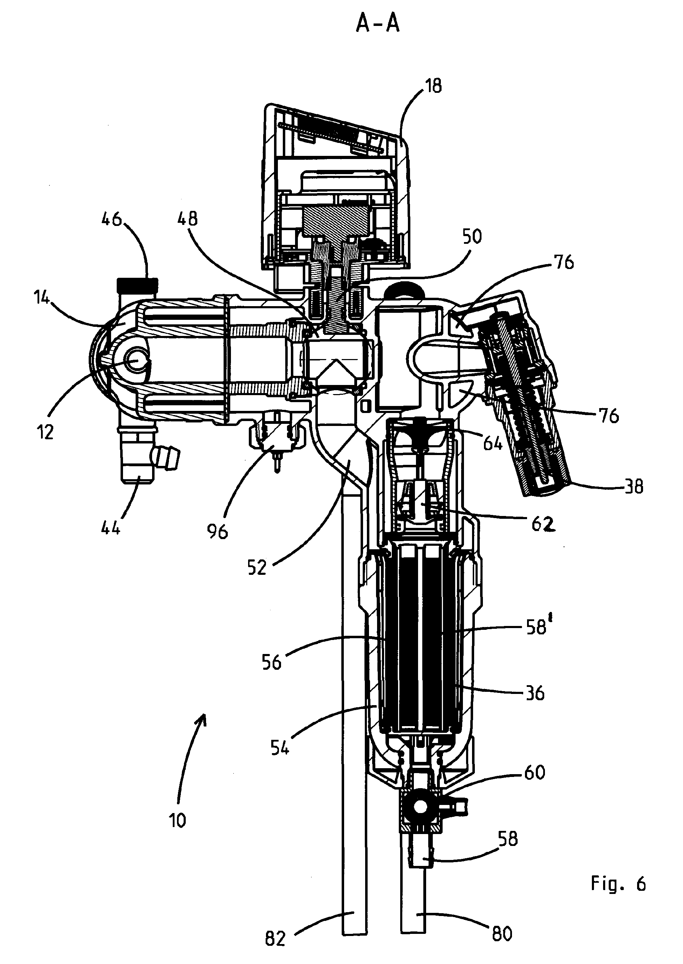

Nachdem das Wasser durch das Ventil im Druckminderer 38 geflossen ist, fließt es in einen Hohlraum 76. Das ist in Figur 6 und 7 zu erkennen. Der Hohlraum 76 ist mit einem Verbindungskanal 78 verbunden, der in Figur 7 zu erkennen ist. Der Verbindungskanal 78 führt durch eine Öffnung 84 in die Zuleitung 80 zum Ionentauscher 24. Der Rücklauf aus dem Ionentauscher 24 erfolgt über eine Leitung 82 in das Armaturenteil 20. Die Öffnung, in der die Leitung 82 mündet, ist in Figur 8 nur andeutungsweise zu erkennen und mit 85 bezeichnet. In demHohlraum führt ein Durchbruch 86 in eine zylindrische, horizontale Bohrung 88. In der Bohrung ist ein Kolben 90 axialbeweglich geführt. Durch Bewegung des Kolbens 90 kann die Öffnungsfläche des Durchbruchs 86 eingestellt werden. Hierzu ist ein Stellgriff 92 an dem Kolben 90 vorgesehen. Es kann somit eingestellt werden, wieviel unbehandeltes Rohwasser unbehandelt vom Druckminderer durch den Durchbruch gelassen wird. Das Rohrwasser fließt dosiert aus der Bohrung 88 durch einen gekrümmten Kanal 94 in den Ringkanal 28 und von dort zum Auslass 16. Die Bohrung 85, in der die Leitung 82 für das enthärtete Wasser mündet, liegt ebenfalls im Ringkanal 28. Dort wird das Rohwasser mit dem enthärteten Wasser gemischt.

Mit einem Leitfähigkeitssensor 96 (Fig.6) wird die Leitfähigkeit des teilenthärteten Wassers ermittelt. Dieser Wert repärsentiert den Kalkgehalt des Wassers. Bei Erschöpfung des Ionentauschers steigt die Leitfähigkeit. Dies ist also ein Indiz, dass der Ionentauscher gewartet werden muss. Entsprechend kann eine Meldung erzeugt und übertragen werden.

Ein Drucksensor misst den Ausgangsdruck und überträgt das Signal an das Steuergerät 18.

Mit der beschriebenen Anordnung werden alle für die Heizungsbefüllung erforderlichen Funktionen in einer Armatur vereint, die bei bekannten Anordnungen auf eine Vielzahl von einzelnen Armaturen verteilt waren. Die Anordnung umfasst ein automatisch gesteuertes Kugelventil zum Absperren, einen rückspülbaren Filter, Strömungs- und Druckmesser zur Ermittlung von Leckage, einen Systemtrenner, einen Druckminderer und einen Ionentauscher mit Verschneideeinrichtung und Leitfähigkeitssensor. Damit wird sichergestellt, dass ausschließlich gereinigtes und kalkarmes Wasser mit dem richtigen Druck in den Heizkreislauf gelangt. Die Anordnung kann mit einem Installationsschritt in die Rohrleitung eingebaut werden. Dadurch wird der Einbau stark vereinfacht und braucht weniger Zeit. Die Rohrleitung wird nur an einer Stelle aufgebrochen. Wenn eine Flanschverbindung verwendet wird, kann der Heizungsvollautomat auf einfache Weise ausgetauscht oder gewartet werden ohne dass die Rohrleitung betroffen ist.

Der Heizungsvollautomat weist einen Anschluss für das Steuergerät 18 auf. Der Zapfen 50 zum Betätigen der Kugel des Kugelventils 48 ist am oberen Ende mit einem Profil versehen. Das Steuergerät 18 mit dem Motor greift an diesem Profil an. Die Verbindung zwischen Steuergerät 18 und Heizungsvollautomat wird unverdrehbar und mit definierter Kugelstellung hergestellt. Die Verbindung wird mit einer in Durchbrüche eingreifenden Klammer gesichert.

Das Steuergerät 18 ist mit einem Sender-Empfänger ausgestattet, welcher über ein Mobilfunknetz, einen Kabelanschluss für das Internet oder ein WLAN eine Verbindung zum Internet herstellt. Über das Internet kann so eine Verbindung mit einem zentralen Server hergestellt werden. Der Heizungsvollautomat 10 kann mit verschiedenen, Komponenten einer Leckageschutzanordnung in einem Mehrfamilienhaus ergänzt werden.

Zum Installieren einer Anordnung wird zunächst der Heizungsvollautomat an die Rohrleitung des Heizkreises angeschlossen. Ansonsten erhält das Steuergerät keine Werte. Anschließend wird das Steuergerät 18 an eine Stromversorgung angeschlossen. Die Internetverbindung des Steuergerätes 18 wird direkt mittels einer eigenen SIM-Karte über ein Mobilfunknetz, über einen Kabelanschluss oder über ein WLAN hergestellt. Bei Verwendung von WLAN ist ein Display und eine Eingabeeinrichtung in Form einer Tastatur für den Zugangscode vorgesehen. Die temporäre IP-Adresse des Steuergerätes 18 wird selbstständig an einen zentralen Server übermittelt. Weiterhin meldet der Wohnungsinhaber, der Verwalter oder sein Installateur das Gerät über ein Internet-Portal an. Hierzu ist ein Code oder ein Identifikationszeichen sichtbar auf dem Gerät angebracht. Der Server verwaltet nun alle relevanten Daten. Die Verwaltungssoftware liegt auf dem Server und kann vom Hersteller auf einfache Weise gewartet und verbessert werden. Das Steuergerät 18 erfordert keine weiteren Installationsschritte oder Wartungsaufwand. Dadurch wird es möglich, die Installation durch den in IT-Angelegenheiten häufig unerfahrenen Installateur durchzuführen ohne einen IT-Fachmann hinzuziehen zu müssen. Der Hardware-Aufwand ist gering.

Der Installateur, Verwalter oder der Wohnungsinhaber kann über ein eigenes Internetportal die für die Anwendung geeigneten Parameter selbstständig eingeben. Zu den Parametern gehören Druckeinstellungen, Druckabfall, Kalkgehalt und dergleichen. Diese Daten sind auf dem Server auch dann gesichert, wenn ein Steuergerät 18 nicht mehr funktionstüchtig ist. Dadurch ist der Wechsel auf ein anderes, identisches Gerät besonders leicht möglich. Der Hersteller kann die verschiedenen Betriebsparameter und sonstige Daten statistisch auswerten. Dadurch kann der Herstellungsprozess optimiert werden. Falls die Parameter direkt am Steuergerät 18 eingegeben werden, werden auch diese neuen Daten an den Server übertragen.

Mit dem Drucksensor wird der Druck in dem Heizkreislauf kontinuierlich überwacht. Fällt der Druck ab so wird der Druckabfall von dem Steuergerät ausgewertet. Ein ungewöhnlicher Druckabfall wird als Leckage gewertet. Dann wird eine Mitteilung an den Installateur, Verwalter oder der Wohnungsinhaber generiert, so dass geeignete Maßnahmen ergriffen werden können.

Im vorliegenden Ausführungsbeispiel wurde das Steuergerät 18 als Teil einer größeren Leckageüberwachungsanordnung mit zentralem Server beschrieben. Die Anordnung ist aber selbstverständlich auch als unabhängige Einheit verwendbar. Dann wird die Mitteilung vom Steuergerät direkt an den Installateur, Verwalter oder der Wohnungsinhaber geschickt.

## Patentansprüche

1. Armaturenanordnung (10) zum Füllen und Nachfüllen von Heizkreisläufen mit Wasser, enthaltend
(a) ein in eine zu dem Heizkreislauf führende Rohrleitung einbaubares, strömungsführendes Armaturengehäuse (14, 20) mit einem Einlass (12) und einem Auslass (16);
(b) einen von einem Motor angetriebenen Absperrhahn (48);
(c) einen Filter (36);
(d) eine Sytemtrenneranordnung mit einem stromaufwärtigen und einem stromabwärtigen Rückflussverhinderer (72, 74) und einem Ablauf (34);
(e) einen Druckminderer (38); und
(f) einen Drucksensor (98);
**dadurch gekennzeichnet, dass**
(g) der Absperrhahn (48) im Bereich eines für den Absperrhahn (48) und die Systemtrenneranordnung (34, 72, 74) gemeinsamen Gehäuses (20) hydraulisch vor der Systemtrenneranordnung (34, 72, 74) angeordnet ist,
(h) das Gehäuse (20) einen hydraulisch hinter dem Absperrhahn (48) angeordneten, ersten Gehäusestutzen aufweist, in dem der Filter (36) einsetzbar ist;
(i) das Gehäuse (20) einen hydraulisch hinter der Systemtrenneranordnung (34, 72, 74) angeordneten, zweiten Gehäusestutzen aufweist, in dem der Druckminderer (38) einsetzbar ist; und
(j) ein Steuergerät (18) vorgesehen ist, welches mit den Signalen des Drucksensors (98) beaufschlagt ist und den Absperrhahn (48) bei einem Druckabfall öffnet.

2. Armaturenanordnung (10) nach Anspruch 1, **dadurch gekennzeichnet, dass** ein Ionentauscher (24) oder andere Einrichtung als Gerät zur Wasserbehandlung mit Anschlüssen an das gemeinsame Gehäuse (20) vorgesehen ist.

3. Armaturenanordnung (10) nach Anspruch 2, **dadurch gekennzeichnet, dass** ein Leitfähigkeitssensor (96) in der Strömung stromabwärts zum Gerät (24) für die Wasserbehandlung vorgesehen ist, dessen Signale an das Steuergerät (18) übertragen werden.

4. Armaturenanordnung (10) nach Anspruch 3, **dadurch gekennzeichnet, dass** eine Verschneideeinrichtung (40) vorgesehen ist, mit welcher dem durch das Gerät (24) für die Wasserbehandlung geleiteten Wasser unbehandeltes Wasser beigemischt wird.

5. Armaturenanordnung (10) nach einem der vorgehenden Ansprüche, **gekennzeichnet durch** eine Turbine (64) oder andere strömungsmessende Mittel, deren Signale an das Steuergerät (18) übertragen werden..

6. Armaturenanordnung (10) nach einem der vorgehenden Ansprüche, **dadurch gekennzeichnet, dass** das Steuergerät (18) eine Kommunikationseinrichtung zur Kommunikation mit einem geeigneten Empfangsgerät über das Internet, Mobilfunknetz, anderes geeignetes Netzwerk oder drahtlosen Übertragungsweg aufweist.

7. Armaturenanordnung (10) nach einem der vorgehenden Ansprüche, **dadurch gekennzeichnet, dass** das gemeinsame Gehäuse (14, 20) aus einem ersten Gehäuseteil (14) zum Anschließen an eine Rohrleitung und einem mit dem ersten Gehäuseteil (14) verbindbaren zweiten Gehäuseteil (20) besteht, wobei der Absperrhahn (48), der Filter (36), die Sytemtrenneranordnung (34, 72, 74), der Druckminderer (38) und der Drucksensor (98) in dem zweiten Gehäuseteil (20) angeordnet sind.

8. Armaturenanordnung nach einem der vorgehenden Ansprüche, **dadurch gekennzeichnet, dass** der Filter (36) als Rückspülfilter mit einem absperrbaren Auslass (60) für das Spülwasser ausgebildet ist.

9. Armaturenanordnung nach Anspruch 8, **dadurch gekennzeichnet, dass** ein Kugelhahn (60) oder eine andere Absperrung im Auslass vorgesehen ist.

## Claims

1. Fitting assembly (10) for the filling and re-filling of heating circuits with water, comprising
(a) a flow conducting fitting housing with an inlet (12) and an outlet (16) adapted to be installed into the pipe leading towards the heating circuit (14,16);
(b) a motor driven stop cock (48);
(c) a filter (36);
(d) a system disconnecting assembly with an upstream and a downstream backflow preventer (72, 74) and a drain (34);
(e) a pressure reducer (38); and
(f) a pressure sensor (98);
**characterised in that**
(g) the stop cock (48) is placed hydraulically upstream of the system disconnecting assembly in the range of a housing common for the stop cock (48) and the system disconnecting assembly (34, 72, 74);
(h) the housing (20) has a first housing socket arranged hydraulically downstream from the stop cock (48) adapted to accomodate the filter (36);
(i) the housing (20) has a second housing socket arranged hydraulically downstream from the system disconnecting assembly (34, 72, 74) adapted to accommodate a pressure reducer (38); and
(j) a control device (18) is provided which receives signals from the pressure sensor (98) and opens the stop cock (48) in the case of a pressure drop.

2. Fitting assembly (10) according to claim 1, **characterised in that** an ion exchanger (24) or other units in the form of a device for water treatment with connections to the common housing (20) is provided.

3. Fitting assembly (10) according to claim 2, **characterised in that** a conductivity sensor (96) is provided in the flow downstream to the device (24) for the water treatment, the signals of which are transmitted to the control device.

4. Fitting assembly (10) according to claim 3, **characterised in that** a blending device (40) is provided, adapted to add untreated water to the water flowing through the device for the water treatment.

5. Fitting assembly (10) according to any of the preceding claims, **characterised by** a turbine (64) or other flow measuring means, the signals of which are transmitted to the control device (18).

6. Fitting assembly (10) according to one of the preceding claims, **characterised in that** the control device (18) is provided with a communication device for the communication with a suitable receiving device via the internet, a mobile network, any other suitable networks or wireless transmission path.

7. Fitting assembly (10) according to one of the preceding claims, **characterised in that** the common housing (14, 20) consists of a first housing part (14) for the connecting to a pipe and a second housing part adapted to be connected with the first housing part (20) whereby the stop cock (48), the filter (36), the system disconnecting assembly (34, 72, 74), the pressure reducer (38), and the pressure sensor (98) are accommodated in the second housing part (20).

8. Fitting assembly (10) according to any of the preceding claims, **characterised in that** the filter (36) is used as a backwash filter with a closable outlet (60) for the backwashing water.

9. Fitting assembly (10) according to claim 8, **characterised in that** a ball valve (60) or a different valve is provided in outlet.

## Revendications

1. Disposition de robinetterie (10) destinée à remplir et compléter le niveau de circuits chauffants avec de l'eau, comprenant
(a) un boîtier de robinetterie (14, 20) guidant le courant, pouvant être implanté dans une conduite de tuyau menant au circuit chauffant et muni d'une admission (12) et d'une évacuation (16) ;
(b) une vanne d'arrêt (48) actionnée par un moteur ;
(c) un filtre (36) ;
(d) une disposition de séparation de systèmes munie de clapets antiretour (72, 74) amont et aval et d'un déversoir (34) ;
(e) d'un réducteur de pression (38) ; et
(f) d'un capteur de pression (98) ;
**caractérisée en ce que**
(g) la vanne d'arrêt (48) est disposée, d'un point de vue hydraulique, avant la disposition de séparation de systèmes (34, 72, 74) dans la zone d'un boîtier commun (20) à la vanne d'arrêt (48) et à la disposition de séparation de systèmes (34, 72, 74) ;
(h) le boîtier (20) présente un premier embout de boîtier disposé, d'un point de vue hydraulique, derrière la vanne d'arrêt (48) et à l'intérieur duquel peut être intégré le filtre (36) ; et
(i) le boîtier (20) présente un second embout de boîtier disposé, d'un point de vue hydraulique, derrière la disposition de séparation de systèmes (34, 72, 74) et à l'intérieur duquel peut être intégré le réducteur de pression (38) ; et
(j) il est prévu un appareil de commande (18) auquel sont appliqués les signaux du capteur de pression (98) et qui ouvre la vanne d'arrêt (48) en cas de chute de pression.

2. Disposition de robinetterie (10) selon la revendication 1, **caractérisée en ce qu'**un échangeur d'ions (24) ou un autre dispositif est prévu comme appareil de traitement de l'eau comprenant des raccords au boîtier commun (20).

3. Disposition de robinetterie (10) selon la revendication 2, **caractérisée en ce qu'**il est prévu un capteur de conductibilité (96) dans le courant en aval de l'appareil de traitement de l'eau (24) dont les signaux sont transmis à l'appareil de commande (18).

4. Disposition de robinetterie (10) selon la revendication 3, **caractérisée en ce qu'**il est prévu un dispositif de mélange (40) permettant de mélanger de l'eau non traitée à l'eau traversant l'appareil de traitement de l'eau (24).

5. Disposition de robinetterie (10) selon l'une quelconque des revendications précédentes, **caractérisée par** une turbine (64) ou d'autres moyens de mesure du courant dont les signaux sont transmis à l'appareil de commande (18).

6. Disposition de robinetterie (10) selon l'une quelconque des revendications précédentes, **caractérisée en ce que** l'appareil de commande (18) présente un dispositif de communication destiné à communiquer avec un récepteur approprié par le biais d'internet, d'un réseau radio mobile, un autre réseau approprié ou une voie de transmission sans fil.

7. Disposition de robinetterie (10) selon l'une quelconque des revendications précédentes, **caractérisée en ce que** le boîtier commun (14, 20) se compose d'un premier élément de boîtier (14) destiné à être raccordé à une conduite de tuyau et un second élément de boîtier (20) pouvant être connecté au premier élément de boîtier (14), la vanne d'arrêt (48), le filtre (36), la disposition de séparation de systèmes (34, 72, 74), le réducteur de pression (38) et le capteur de pression (98) étant disposés dans le second élément de boîtier (20).

8. Disposition de robinetterie (10) selon l'une quelconque des revendications précédentes, **caractérisée en ce que** le filtre (36) est configuré sous forme de filtre de lavage à contre-courant muni d'une évacuation (60) pour l'eau de lavage, pouvant être fermée.

9. Disposition de robinetterie (10) selon la revendication 8, **caractérisée en ce qu'**un robinet à tournant sphérique (60) ou un autre dispositif de fermeture est prévu dans l'évacuation.
